# NEUE EUROPÄISCHE PATENTSCHRIFT

(11) **EP 2 739 913 B2**
(45) Veröffentlichungstag und Bekanntmachung des Hinweises auf die Entscheidung über den Einspruch: **16.10.2024**
(45) Hinweis auf die Patenterteilung: 26.12.2018
(21) Anmeldenummer: 12734929.8
(22) Anmeldetag: 09.07.2012
(51) Int. Cl.: F24F 12/00, F24F 5/00, F24F 13/30, F24F 7/08, F24F 7/10

(54) **EINBAUPROFIL**
RECESSED PROFILE
PROFILÉ DE MONTAGE

(30) Priorität: 03.08.2011 DE 102011080358; 03.08.2011 DE 202011104662 U
(43) Veröffentlichungstag der Anmeldung: 11.06.2014
(73) Patentinhaber: LUNOS Lüftungstechnik GmbH & Co. KG für Raumluftsysteme, 13593 Berlin (DE)
(72) Erfinder: MERSCHER, Michael, 13585 Berlin (DE)
(74) Vertreter: Eisenführ Speiser
(86) Internationale Anmeldenummer: PCT/EP2012/063434
(87) Internationale Veröffentlichungsnummer: WO 2013/017378

(56) Entgegenhaltungen:
- WO-A2-2010/085197
- WO-A2-2010/085197
- DE-A1- 3 613 942
- DE-C1- 19 730 019
- DE-C1- 19 730 019
- DE-U- 6 937 165
- DE-U1- 202010 015 615
- DE-U1- 9 301 812
- FR-A1- 2 509 022
- FR-A1- 2 583 000
- FR-A1- 2 583 000
- JP-A- 2010 196 945
- JP-A- 2010 196 945
- US-A- 3 941 185
- US-A- 3 941 185
- US-A- 5 375 649
- US-A- 5 396 783
- US-B2- 7 238 105

## Beschreibung

Die Erfindung betrifft ein Einbauprofil zum Anbau an ein Wandsystem in einer Gebäudewand.

Im Zuge von Energiesparmaßnahmen wird eine effiziente Belüftung von Räumen wie beispielsweise Wohnräumen oder Büroräumen zunehmend wichtig. Durch Öffnen eines Fensters kann zwar ein Luftaustausch mit der Außenluft erreicht werden, hierbei entweicht bei eingeschalteter Heizung oder Klimaanlage jedoch auch eine große Menge von Wärmeenergie aus dem Fenster bzw. es strömt warme Luft in den gekühlten Innenraum. Hierdurch geht ein erheblicher Teil der für das Heizen oder Kühlen aufgewendeten Energie verloren. Außerdem ist ein geöffnetes Fenster immer mit einer erhöhten Einbruchgefahr verbunden.

Deshalb wurden bereits Systeme entwickelt, mit welchen bei der Lüftung eines Raums dezentral Wärme rückgewonnen werden kann. Unter "dezentral" ist dabei die Unabhängigkeit von einem installierten Heizungs- oder Kühlsystem zu verstehen. Gängige Systeme benötigen jedoch aufgrund der notwendigen Wärmespeicher viel Platz und ragen in den Raum herein. Außerdem sind zur Installation solcher Systeme häufig umfangreiche Baumaßnahmen nötig.

Es wäre deshalb wünschenswert, eine Lüftung mit dezentraler Wärmerückgewinnung mit geringerem Aufwand, insbesondere mit geringerem Platzbedarf, vorzusehen.

Aus dem Dokument US 3, 941,185 ist ein Lüftungsgerät zur Wohnraumbelüftung bekannt. Ein längliches Gehäuse ist an einem Ende mit einem Ventilator ausgestattet, der einen reversiblen Motor hat, um die Drehrichtung des Ventilators zu steuern. Eine Folge von Wärmetauscher-Platten ist im Gehäuse parallel zur Richtung der Luftströmung positioniert. Thermostaten an beiden Enden des Gehäuses messen die Temperatur der vorbeiströmenden Luft und steuern dadurch die Drehrichtung des Ventilators.

Aus Dokument FR2 509 022 ist ein Lüftungsgerät mit den Merkmalen der Präambel des Anspruchs 1 bekannt.

Erfindungsgemäß wird ein Einbauprofil gemäß Anspruch 1 sowie ein System zur Belüftung eines Raums gemäß Anspruch 9 bereitgestellt. Bevorzugte Ausführungen können beispielsweise den Unteransprüchen entnommen werden.

Gemäß einem ersten Aspekt betrifft die Erfindung also ein Einbauprofil gemäß Anspruch 1 zum Anbau an ein Wandsystem in einer Gebäudewand.

Das Einbauprofil weist einen Profilinnenraum auf, der als Strömungsraum ausgebildet ist, und welcher einen Einlass und einen Auslass aufweist. Das Einbauprofil weist ferner ein Wärmetauschermaterial auf, welches sich im Strömungsraum strömungsmäßig, d. h. durchströmbar zwischen dem Einlass und dem Auslass befindet. Ferner weist es ein Ventilationssystem zur bidirektionalen Strömungsförderung durch das Wärmetauschermaterial auf. Das Ventilationssystem weist dabei wenigstens einen Ventilator auf, der unter Belassen eines Vergleichmäßigungsabstands vom Wärmetauschermaterial im Strömungsraum angeordnet ist.

Unter einem Wandsystem werden hier Elemente verstanden, welche typischerweise in einer Wand eingebaut sind. Hierbei kann es sich beispielsweise um ein Fenster, eine Tür, eine Fensterbank, eine Fußleiste oder dergleichen handeln. Es kann sich jedoch auch um einen Durchbruch handeln, welcher eigens für das Einsetzen eines Einbauprofils ausgebildet ist.

Durch das erfindungsgemäße Einbauprofil wird eine deutliche Verkleinerung des für eine dezentrale Lüftung mit Wärmerückgewinnung notwendigen Platzes und eine Steigerung der Effektivität und des Wärmerückgewinnungsgrades erreicht, da durch den Vergleichmäßigungsabstand eine gleichmäßigere Durchströmung des Wärmetauschermaterials erreicht wird. Im Gegensatz dazu würde bei unmittelbarem Angrenzen des Ventilators an das Wärmetauschermaterial eine strömungsmäßige Totzone, welche sowohl bei Radialwie auch bei Axialventilatoren auftritt, zu einer erheblich ungleichmäßigen Durchströmung des Wärmetauschermaterials führen. Damit wäre die Wärmespeicherkapazität des Wärmetauschermaterials nicht vollständig genutzt.

Das Einbauprofil weist vorzugsweise eine äußere Hülle auf, welche beispielsweise aus Stahl, Aluminium oder Kunststoff hergestellt sein kann. Im Querschnitt betrachtet ist diese äußere Hülle des Einbauprofils, oder anders ausgedrückt das Einbauprofil an sich, kleiner als eine gedachte rechteckförmige Begrenzung, wobei mindestens eine Seite der rechteckförmigen Begrenzung eine Länge von weniger als 15 cm, besonders bevorzugt von weniger als 10 cm und ganz besonders bevorzugt von weniger als 8 cm aufweist. Besonders bevorzugt weist auch eine zu einer solchen Seite quer stehende Seite der rechteckförmigen Begrenzung eine Länge von weniger als 15 cm, besonders bevorzugt von weniger als 10 cm und ganz besonders bevorzugt von weniger als 8 cm auf.

Der Einlass und der Auslass des Profilinnenraums können als einfache Öffnungen ausgebildet sein. Bevorzugt sind sie jedoch mit Lüftungsgittern versehen, welche das Eindringen von Gegenständen verhindern. Zum Schutz vor Staub und Insekten können ferner feinmaschige Fliegengitter an dem Einlass und dem Auslass angebracht sein. Sollen der Einlass oder der Auslass verschließbar ausgebildet werden, so können hierfür beispielsweise Lamellen oder Klappen verwendet werden.

In einer bevorzugten Ausführungsform weist das Einbauprofil eine mit Magneten am Einbauprofil befestigte Innenblende auf. Die Innenblende weist zwei den Lüftungsöffnungen zugeordnet angeordnete Lüftungsfelder mit Lüftungsschlitzen oder Lüftungsbohrungen auf. Nimmt man diese Blende ab und dreht diese um 180°, wird die Lüftungsöffnung dadurch verschlossen, weil die Lüftungsfelder nicht mehr über den Lüftungsöffnungen angeordnet sind. Das Lüftungsgerät ist so vollkommen schließbar, Luft kann nicht mehr eindringen. Zusätzlich ist außermittig ein zusätzlicher Magnet befestigt, so dass ein am Einbauprofil angebrachter Hall-Sensor die Position der Blende detektieren kann. Das Ventilationssystem kann somit abschaltet werden, sobald die Blende abgenommen oder verdreht aufgesetzt wird.

Es sei verstanden, dass die Bezeichnungen "Einlass" und "Auslass" sich auf eine bestimmte Strömungsrichtung der Luft beziehen, welche durch die Drehrichtung des Ventilators vorgegeben ist. Für den Betrieb des Einbauprofils zur Lüftung mit Wärmerückgewinnung eines Raums ist es vorteilhaft, dass die Strömungsrichtungen alternierend abgewechselt werden. Insofern ist es bei einem Einbauprofil nicht vorgesehen, anhand konstruktiver Merkmale zwischen einem Einlass und einem Auslass zu unterscheiden. Vielmehr wird bei Änderung der Strömungsrichtung ein Einlass zu einem Auslass und ein Auslass zu einem Einlass. Das Einbauprofil ist insofern bevorzugt symmetrisch ausgebildet, was in diesem Fall bedeutet, dass Luft sowohl vom Einlass zum Auslass wie auch umgekehrt strömen kann. Nachfolgend wird im Sinne der Klarheit für ein Strukturelement, welches als Einlass oder Auslass dienen kann, in der gesamten Beschreibung nur jeweils eine der Bezeichnungen verwendet, ohne dass dies bedeuten würde, dass das Strukturmerkmal nicht auch gemäß der anderen Bezeichnung verwendbar ist.

Zwischen dem Ventilator und dem Einlass oder dem Auslass, welcher an den Ventilator strömungsmäßig angrenzt, d. h. im Raum ohne Wärmetauschermaterial im Strömungsfluss des Ventilators, ist bevorzugt ferner eine Strömungsleitvorrichtung vorgesehen. Diese kann die Luft, welche der Ventilator ansaugt oder ausbläst möglichst verlustarm umlenken; insbesondere umlenken von einem Durchlass (Einlass oder Auslass) zum Ventilator oder umgekehrt.

Das Wärmetauschermaterial, welches sich im Strömungsraum zwischen dem Einlass und dem Auslass befindet, ist derart ausgebildet, dass es sich erwärmt, wenn es von Luft mit einer höheren Temperatur als der Temperatur des Wärmetauschermaterials durchströmt wird. Ebenso kühlt es sich ab, wenn es von einer Luft mit einer geringeren Temperatur als der Temperatur des Wärmetauschermaterials durchströmt wird. Wird also der Ventilator so geschaltet, dass Luft aus einem beheizten Raum ins Freie geleitet wird, so kann sich ein vorher abgekühltes Wärmetauschermaterial erwärmen. Der Luft wird dabei die Energie entzogen. Kehrt anschließend der Ventilator die Drehrichtung um, so dass Luft von der kalten Außenseite in den Raum geleitet wird, so strömt diese Luft an dem wärmeren Wärmetauschermaterial vorbei. Dabei wird die Luft erwärmt. Insgesamt wird dabei eine Rückgewinnung eines Teils der ansonsten beim konventionellen Lüften verloren gehenden Wärme erreicht. In klimatisierten Räumen funktioniert das Prinzip entsprechend umgekehrt.

Geeignete Wärmetauschermaterialien sind Keramiken, insbesondere solche mit einem Anteil an Metalloxiden oder Metallen. Beispielsweise wird hierfür Aluminiumoxid verwendet. Auch reine Metalle oder Metalllegierungen sowie Kunststoffe können als Wärmetauschermaterialien verwendet werden.

Ein Ventilationssystem zur bidirektionalen Strömungsführung durch das Wärmetauschermaterial weist wenigstens einen Ventilator auf. Gemäß einer Ausführung weist es genau einen Ventilator auf, welcher bidirektional betreibbar ist. Eine Änderung des Strömungsflusses ist dadurch erreichbar, dass der Ventilator umgepolt wird und dabei seine Drehrichtung ändert. Alternativ kann das Ventilationssystem auch einen ersten Ventilator, welcher zwischen dem Wärmetauschermaterial und dem Einlass angeordnet ist, und einen zweiten Ventilator, welcher zwischen dem Wärmetauschermaterial und dem Auslass angeordnet ist, aufweisen. In diesem Fall gibt es zwei Möglichkeiten. Zum einen ist es möglich, dass beide Ventilatoren gleichzeitig laufen und den Strömungsfluss in die gleiche Richtung aufrecht erhalten. Alternativ ist es möglich, einen der beiden Ventilatoren nur für den Strömungsfluss in eine Richtung und den anderen der beiden Ventilatoren nur für den Strömungsfluss in die andere Richtung zu verwenden. Dann ruht bevorzugt immer ein Ventilator, während sich der andere dreht. Anders ausgedrückt sind bei dieser Ausführung der erste und der zweite Ventilator abwechselnd betreibbar, wobei jeder Ventilator nur in einer Strömungsrichtung betreibbar ist.

Gemäß einer Ausführung ist der Ventilator ein Axialventilator.

Durch den Vergleichmäßigungsabstand, welchen der Ventilator zum Wärmetauschermaterial einhält, wird erreicht, dass ein durch den Ventilator erzeugter Luftstrom gleichmäßig durch das Wärmetauschermaterial geht. Bereits erwähnte Totzonen von Ventilatoren - bei Axialventilatoren regelmäßig um den Drehpunkt angeordnete Zonen und bei Radialventilatoren aufgrund des Aufbaus - wirken dann nicht mehr derart, dass eine ausreichende Anströmung auf das Wärmetauschermaterial verhindert wird. Stattdessen ist es möglich, dass auch in Bereichen, welche bei einem unmittelbar an das Wärmetauschermaterial angrenzenden Ventilator aufgrund einer Totzone des Ventilators nicht ausreichend durchströmt sind, eine Wärmeaufladung bzw. Wärmerückführung erfolgt. Das sonst auftretende Problem schlechter Wirkungsgrade wird vermieden. Mit dem Konzept des Vergleichmaßigungsabstandes werden zusammenfassend Totzonen vermieden und der Wirkungsgrad erheblich verbessert.

Ohne Vergleichmäßigungsabstand bläst beispielsweise ein Axiallüfter ungleichmäßig in den Wärmetauscher hinein. Ein Außenbereich der Querschnittsfläche wird deutlich stärker durchströmt als ein zentraler Bereich der Querschnittsfläche. Dadurch wird der zentrale Bereich nicht ausreichend mit warmer Luft vorgewärmt. Beim zweiten Zyklus, also beim Hindurchsaugen von Außenluft, wird zwar der Wärmetauscher gleichmäßig durchströmt. Im zentralen Bereich der Querschnittsfläche des Wärmetauschers wird aber nun kältere Luft einströmen, weil in diesem Bereich nur wenig gespeicherte Wärmeenergie vorhanden ist. Auf diese Weise leidet der Wirkungsgrad des Wärmetauschers als Ganzes. Durch Vorsehen des Vergleichmäßigungsabstands dagegen wird der Luftstrom des Lüfters so verwirbelt und gebrochen, dass auch beim ersten Zyklus die Luft gleichmäßig im Außenbereich wie im zentralen Bereich durch den Wärmetauscher strömt und diese gleichmäßig erwärmt wird, um im zweiten Zyklus entsprechend gleichmäßig im äußeren wie im zentralen Bereich Wärme an einströmende Außenluft abgeben zu können.

In einer Ausführungsform ist der Ventilator ein Axialventilator, welcher ein Ventilatorrad hat, dessen äußerer Umfang in mindestens einer senkrecht zur Achse des Ventilators stehenden Ebene durch einen Kreis beschreibbar ist. Der Vergleichmäßigungsabstand ist bei dieser Ausführungsform mit einer Abweichung von maximal 20% gleich dem Radius des Kreises. Bevorzugt liegt die Abweichung in einem Bereich kleiner 10%. Besonders vorteilhaft entspricht der Vergleichmäßigungsabstand genau dem Radius des Kreises.

Der Vergleichmäßigungsabstand beträgt bevorzugt weniger als 10 cm, besonders bevorzugt beträgt er weniger als 3 cm. Mit solchen Werten kann eine ausreichende Verteilung des Luftstroms bei gleichzeitiger Verringerung der Einbaumaße erreicht werden. Die ausreichende Darstellung eines Vergleichmäßigungsabstandes ermöglicht letztlich die Verringerung der Einbaumaße, da ausreichend Wärmespeicher mit guter Ausnutzung zur Verfügung steht.

In dem Vergleichmäßigungsraum ist erfindungsgemäß ein Strömungsvergleichmäßiger angeordnet, welcher zusätzlich für eine gleichmäßige Verteilung des Luftstroms sorgt. Beispielsweise kann hierzu eine Watte, ein Vlies oder ein sonstiges poröses Material verwendet werden. Durch einen solchen Strömungsvergleichmäßiger kann der für eine ausreichende Vergleichmäßigung notwendige Vergleichmäßigungsabstand verringert werden, vorteilhaft können damit auch die Einbaumaße weiter verringert werden.

Eine weitere Optimierung der Anströmung des Wärmetauschers wird durch eine Schrägstellung des Ventilators erreicht. Der Ventilator ist so angeordnet, dass seine Drehachse um einen Winkel zwischen 30° und 60° aus dem Luftstrom herausgedreht ist. Hierdurch wird der Luftstrom vor dem Eintritt in den Wärmetauscher zusätzlich verwirbelt, so dass der Wärmetauscher gleichmäßiger angeströmt werden kann. Eine solche Ventilatoranordnung führt auch zu einem niedrigen Stromverbrauch des Ventilators.

Gemäß einer Ausführung verläuft ein Strömungspfad durch das Wärmetauschermaterial quer zu jeweiligen Strömungspfaden durch den Einlass und durch den Auslass. Dies bedeutet anders ausgedrückt, dass die Luft nach Eintritt durch den Einlass zunächst um etwa 90° umgelenkt wird, anschließend durch den Ventilator und durch das Wärmetauschermaterial strömt, anschließend noch einmal um 90° umgelenkt wird, und dann durch den Auslass das Einbauprofil wieder verlässt. Mit einer solchen Anordnung kann der Querschnitt des Einbauprofils klein gehalten werden, da die Länge des Einbauprofils für die Anordnung des Wärmetauschermaterials genutzt werden kann. Alternativ können sich jedoch auch Einlass und Auslass einander gegenüberliegen, wobei sich das Wärmetauschermaterial sowie der Ventilator zwischen dem Einlass und dem Auslass befinden. Eine solche Ausführung kann beispielsweise dann vorteilhaft sein, wenn eine längere Strecke zwischen Einlass und Auslass zur Verfügung steht.

Bevorzugt ist das Wärmetauschermaterial in einer Kassette beinhaltet. Damit kann ein Wärmetauschermaterial verwendet werden, welches beispielsweise pulver- oder kugelförmig ist und ohne die umschließende Kassette mit dem Luftstrom weggeblasen werden würde. Alternativ kann ein Wärmetauschermaterial eingesetzt bzw. verwendet werden, welches fest ist und unmittelbar an dem Einbauprofil befestigt ist. Das Wärmetauschermaterial kann homogen oder auch inhomogen verteilt sein.

Bevorzugt weist das Einbauprofil einen Schallschutz zur Abschirmung von Ventilatorgeräuschen auf. Damit kann eine etwaige Geräuschbelästigung in dem Raum, welcher mit Hilfe des Einbauprofils belüftet werden soll, verringert oder vermieden werden. Ein Schallschutz kann beispielsweise in Form einer schalldämmenden Isolierung vorgesehen sein. Eine schalldämmende Isolierung kann gleichzeitig wärmeisolierend sein. Alternativ kann eine hauptsächlich wärmedämmende Isolierung vorgesehen sein, was den Wirkungsgrad weiter verbessern kann.

Bevorzugt verfügt das Einbauprofil über Hülsen, die im Strömungsraum senkrecht zur Strömungsrichtung angeordnet sind. Diese Hülsen sind geeignet, um Lasten abzufangen und/oder um Schrauben aufzunehmen, über die z.B. ein Fenster oder eine Tür mit dem Mauerwerk verbunden werden kann. Eine solche Schraubverbindung durch die Hülse trägt auch zu einem verbesserten Einbruchschutz bei. Darüberhinaus können die Hülsen als Positionsarretierung für verschiedene Teile des Einbauprofils, wie Ventilator, Wärmetauscher oder Strömungsleitvorrichtung dienen. Die Hülsen werden bevorzugt direkt in das Profil eingeschoben. Gemäß einem zweiten Aspekt betrifft die Erfindung ein System zur Belüftung eines Raums, welches ein Einbauprofil gemäß dem ersten Aspekt der Erfindung sowie ein weiteres Einbauprofil gemäß dem ersten Aspekt der Erfindung aufweist. Das Einbauprofil und das weitere Einbauprofil werden vorteilhaft alternierend gegenläufig geschaltet.

Mögliche Ausführungen und Vorteile, welche mit Bezug auf das Einbauprofil gemäß dem ersten Aspekt der Erfindung beschrieben sind, beziehen sich ebenso auf das System gemäß dem zweiten Aspekt der Erfindung. So können sowohl für das Einbauprofil wie auch für das weitere Einbauprofil beliebige Ausführungen, wie mit Bezug auf den ersten Aspekt der Erfindung erläutert, verwendet werden, wobei das System gemäß dem zweiten Aspekt der Erfindung alle Merkmale des ersten Aspektes der Erfindung beinhaltet. Bevorzugt sind das Einbauprofil und das weitere Einbauprofil identisch ausgebildet.

Unter einer alternierenden gegenläufigen Schaltung wird verstanden, dass ein Einbauprofil Luft aus dem zu belüftenden Raum nach außen bläst, während gleichzeitig das andere Einbauprofil Luft aus der Umgebung in den Raum herein bläst. Damit ist sichergestellt, dass im Raum kein Über- oder Unterdruck entsteht.

Wenn sich während eines gleichmäßigen Betriebs des Einbauprofils und des weiteren Einbauprofils das Wärmetauschermaterial in demjenigen Einbauprofil, welches Luft aus dem Raum hinaus bläst, ausreichend erwärmt hat und das Wärmetauschermaterial in dem anderen Einbauprofil sich entsprechend abgekühlt hat, wird die Strömungsrichtung der Luft durch die beiden Einbauprofile umgekehrt. Dies kann auf die weiter oben beschriebenen Arten erfolgen. Dann wird durch das nunmehr warme Wärmetauschermaterial die von außen hereinströmende Luft angewärmt, während sich das nunmehr kalte Wärmetauschermaterial durch die von innen nach außen strömende Luft aufwärmt. Damit wird eine optimale Energierückgewinnung bei gleichmäßiger Lüftung und Vermeidung von Über- oder Unterdruck im Raum erreicht.

Das Einbauprofil und das weitere Einbauprofil können unabhängig voneinander an unterschiedlichen Stellen im Raum angeordnet sein. Gemäß einer Ausführung sind sie miteinander verbunden. Beispielsweise können sie so miteinander verbunden sein, dass sie zusammen eine stangenförmige Struktur ergeben.

Wenn das Einbauprofil und das weitere Einbauprofil miteinander verbunden sind, ist bevorzugt das System gemäß einer Ausführung im Adapterprofil eines Fensters oder als Adapterprofil eines Fensters ausgebildet. Dies ermöglicht einen Einbau des Systems unmittelbar unterhalb, oberhalb oder auch seitlich an einem Fenster. Ebenso könnte ein solches System in einem separaten Mauerdurchbruch, in einem Türrahmen, in einer Türschwelle, oder an anderen Orten angeordnet sein.

Gemäß einer bevorzugten Ausführung ist das System als Teil eines Fensterrahmens ausgebildet. Damit kann das System als Teil eines Fensters verkauft und eingebaut werden. Es sind keine zusätzlichen Bau- oder Installationsarbeiten erforderlich. Außerdem kann das System damit formschön in ein ohnehin einzusetzendes Fenster integriert werden.

Weitere Merkmale und Vorteile werden bei Betrachtung der nachfolgend mit Bezug auf die Figuren beschriebenen Ausführungsbeispiele offensichtlich werden.
- Fig. 1a: zeigt ein nicht durch die beanspruchte Erfindung abgedecktes Ausführungsbeispiel eines Systems mit zwei Einbauprofilen.
- Fig. 1b: zeigt ein alternatives, nicht durch die beanspruchte Erfindung abgedecktes Ausführungsbeispiel eines Systems.
- Fig. 2: zeigt das System von Fig. 1a in einem anderen Einbauzustand.
- Fig. 3: zeigt eine Vorderansicht des Systems von Fig. 1a.
- Fig. 4: zeigt eine Rückansicht des Systems von Fig. 1a.
- Fig. 5: zeigt das System von Fig. 1a in einer Schnittansicht.
- Fig. 6: zeigt ein Ausführungsbeispiel eines Systems wie in Fig. 1a dargestellt, welches in einem Adapterprofil eines Fensters ausgebildet ist.
- Fig. 7: zeigt ein Ausführungsbeispiel eines Systems wie in Fig. 1a dargestellt, welches als Teil eines Fensterrahmens ausgebildet ist.
- Fig. 8: zeigt ein Ausführungsbeispiel eines Systems wie in Fig. 1b dargestellt, welches als Teil eines Fensterrahmens ausgebildet ist.
- Fig. 9: zeigt ein Ausführungsbeispiel eines Systems wie in Fig. 1b dargestellt, welches als Teil eines Fensterrahmens ausgebildet ist und vertikal angeordnet ist.
- Fig. 10: zeigt ein Ausführungsbeispiel eines Systems wie in Fig. 1a dargestellt, welches als Teil eines Fensterrahmens ausgebildet und vertikal angeordnet ist.
- Fig. 11: zeigt in drei Teilfiguren a), b) und c) eine Variante eines Ausführungsbeispiels eines Systems gemäß dem zweiten Aspekt der Erfindung, wie in Fig. 1b dargestellt.
- Fig. 12: zeigt in Teilfigur a) eine Innenblende zur Verwendung in einem System gemäß dem zweiten Aspekt der Erfindung und in Teilfigur b) das Wirkprinzip der um 180 ° verdrehten Innenblende.
- Fig. 13: zeigt in drei Ansichten der Fig. 13a), b) und c) eine Hülse für ein Einbauprofil.

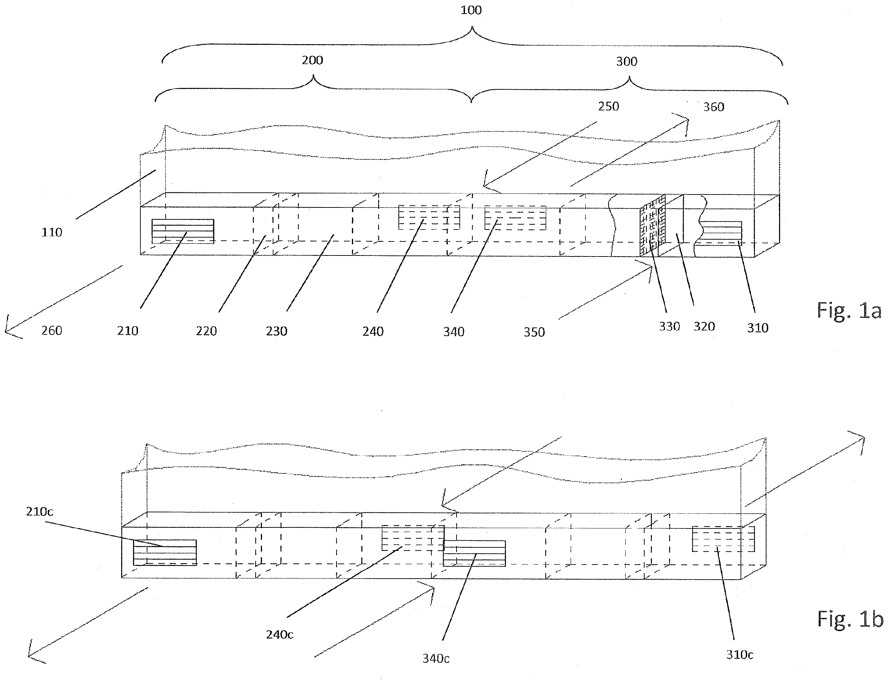

Fig. 1a zeigt ein nicht durch die beanspruchte Erfindung abgedecktes System 100. Dieses weist ein erstes Einbauprofil 200 und ein zweites Einbauprofil 300 auf. Die Einbauprofile 200, 300 sind nebeneinander angeordnet, sodass das System 100 insgesamt eine langgestreckte Form hat.

Das System 100 ist in eine Wand 110 eingebaut. Damit ermöglicht es die Belüftung eines Raums.

Das erste Einbauprofil 200 weist einen ersten Auslass 210, einen ersten Einlass 240 und strömungsmäßig dazwischenliegend einen ersten Ventilator 220 und ein erstes Wärmetauschermaterial 230 auf. Der Ventilator 220 saugt Luft entsprechend einer Strömungsrichtung 250 von einer Außenseite an, welcher durch die Wand 110 von einem Innenraum getrennt wird, leitet diese durch das Wärmetauschermaterial 230, und bläst sie schließlich durch den ersten Auslass 210 entsprechend einer Strömungsrichtung 260 in den Raum. Mit Hilfe des Wärmetauschermaterials 230 wird die Luft vor Eintritt in den Raum temperiert. Im typischen Fall, in welchem das System 100 in einer Heizperiode angewendet wird, hat das erste Wärmetauschermaterial 230 eine höhere Temperatur als die durch den ersten Einlass 240 einströmende Luft. Dadurch wird die Luft, bevor sie in den Raum einströmt, erwärmt.

Umgekehrt, jedoch analog funktioniert im gezeigten Fall das zweite Einbauprofil 300. Das zweite Einbauprofil 300 weist einen zweiten Einlass 310, einen zweiten Ventilator 320, ein zweites Wärmetauschermaterial 330 und einen zweiten Auslass 340 auf.

Mit Hilfe des zweiten Ventilators 320 wird Luft entlang einer Strömungsrichtung 350 durch den zweiten Einlass 310 von dem Raum eingesaugt. Anschließend bläst der zweite Ventilator 320 die Luft durch das zweite Wärmetauschermaterial 330, welches beim Betrieb in der Heizperiode typischerweise eine niedrigere Temperatur als die durchströmende Luft aufweist. Dabei wird das zweite Wärmetauschermaterial 330 erwärmt. Schließlich strömt die Luft durch den zweiten Auslass 340 ins Freie.

Durch die beschriebene Funktionalität wird der Raum, welcher durch die Wand 110 von der Umgebungsluft abgetrennt wird, gleichzeitig be- und entlüftet. Hierdurch wird das Entstehen eines Über- oder Unterdrucks vermieden, wodurch auch ein ungewolltes und unkontrolliertes Nachströmen von Luft durch Ritzen, Schlüssellöcher oder ähnliches vermieden wird. Durch das System 100 wird jedoch insbesondere auch vermieden, dass angewärmte Heizungsluft unter hohem Energieverlust ins Freie strömt. Stattdessen wird die Wärme der ausströmenden Luft in dem zweiten Wärmetauschermaterial 330 gespeichert. Die einströmende Luft wird durch das erste Wärmetauschermaterial 230 erwärmt. Nach einer bestimmten Zeit werden die Drehrichtungen der Ventilatoren umgekehrt, so dass die im zweiten Wärmetauschermaterial 330 gespeicherte Wärme zum Heizen der nunmehr mit Hilfe des zweiten Einbauprofils 300 in den Raum geblasenen Luft verwendet wird. Gleichzeitig wird dann Luft mit Hilfe des ersten Einbauprofils 200 aus dem Raum ins Freie geblasen, und die Wärme wird in dem ersten Wärmetauschermaterial 230 gespeichert. Durch Umpolen der Ventilatoren sind die beschriebenen Vorgänge beliebig oft sequentiell wiederholbar, so dass ein faktisch kontinuierlicher Betrieb des Systems 100 sichergestellt ist.

Fig. 1b zeigt ein alternatives, nicht durch die beanspruchte Erfindung abgedecktes Ausführungsbeispiel des in Fig. 1a dargestellten Systems, welches dahingehend abgewandelt ist, dass ein erster Einlass 240c und ein zweiter Auslass 340c weiter voneinander beabstandet sind als bei dem System von Fig. 1a. Dementsprechend sind ein erster Auslass 210c und ein zweiter Einlass 310c näher beieinander angeordnet. Ansonsten bestehen keine Unterschiede zu dem in Fig. 1a dargestellten Ausführungsbeispiel, weshalb auf eine Wiederholung verzichtet wird.

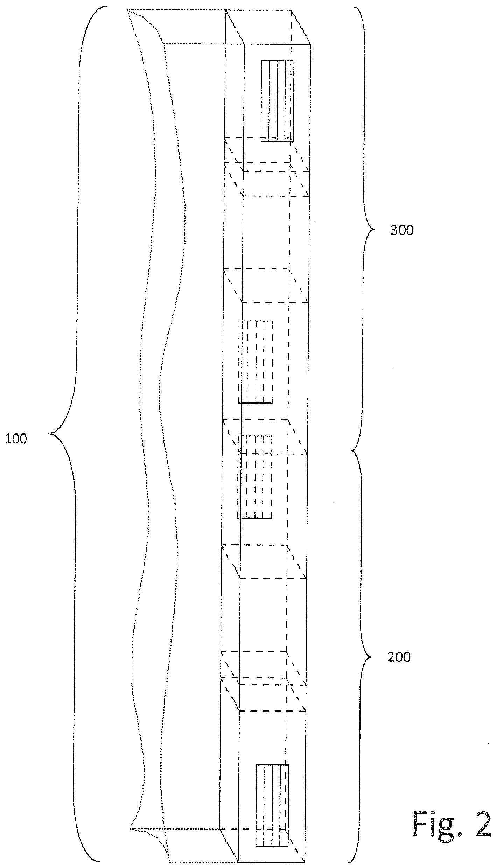

Fig. 2 zeigt das System 100 von Fig. 1a in einem anderen Einbauzustand. Das System 100 ist dabei im Unterschied zum horizontalen Einbau in Fig. 1a vertikal eingebaut. Dabei befindet sich das zweite Einbauprofil 300 über dem ersten Einbauprofil 200.

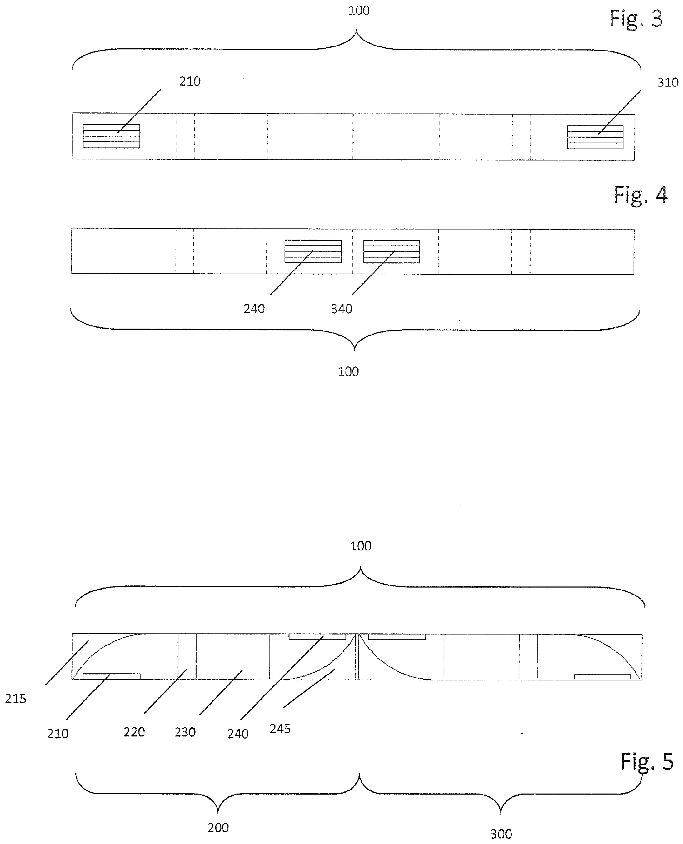

Fig. 3 zeigt eine Vorderansicht des Systems 100 von Fig. 1a. Dabei sind lediglich der erste Auslass 210 und der zweite Einlass 310 sichtbar. Die anderen Elemente des ersten Einbauprofils 200 und des zweiten Einbauprofils 300 sind in diesem Zustand nicht sichtbar. Die gezeigte Vorderansicht entspricht typischerweise derjenigen, welche von einem Raum aus zu sehen ist. Der erste Auslass 210 und der zweite Einlass 310 sind dabei bewusst ausreichend weit voneinander beabstandet, damit durch den ersten Auslass 210 in den Raum eingeblasene Luft nicht gleich durch den zweiten Einlass 310 wieder abgesaugt wird.

Fig. 4 zeigt eine Rückansicht des Systems 100 von Fig. 1a, welches typischerweise von einer Außenseite, also vom Freien oder einen kälteren Raum (z. B. Garage oder dergleichen) aus zu sehen ist. Hierbei sind von dem ersten Einbauprofil 200 und dem zweiten Einbauprofil 300 lediglich der erste Einlass 240 und der zweite Auslass 340 zu sehen. Diese sind zwar nahe zueinander gelegen, aufgrund des üblicherweise im Freien herrschenden Winds und einer geeigneten Luftführung, z.B. durch Lamellen, welche die Luftströme in unterschiedliche Richtungen lenken, ist dies jedoch meistens unproblematisch. Wenn bei einer Anwendung die Gefahr besteht, dass die ausströmende Luft gleich wieder eingesaugt werden könnte, beispielsweise bei Installation in windgeschützten Bereichen, so kann bevorzugt das System verwendet werden, welches in Fig. 1b dargestellt ist.

Fig. 5 zeigt das System 100 von Fig. 1a in einer schematischen Schnittansicht. Dabei sind weitere Elemente des ersten Einbauprofils 200 gezeigt, die beim zweiten Einbauprofil symmetrisch in analoger Weise aufgebaut sind.

Das Einbauprofil 200 weist eine strömungsmäßig zwischen dem ersten Auslass 210 und dem ersten Ventilator 220 gelegene erste Strömungsleitvorrichtung 215 auf. Die erste Strömungsleitvorrichtung 215 sorgt dafür, dass die Luft, welche von dem ersten Ventilator 220 in Richtung des ersten Auslasses 210 geblasen wird, um 90° umgelenkt wird. Damit wird unerwünschter Luftstau und Verwirbelung vermieden.

Ebenso ist Fig. 5 zu entnehmen, dass das erste Einbauprofil 200 neben den bereits erwähnten Komponenten eine zweite Strömungsleitvorrichtung 245 aufweist, welche den von dem ersten Einlass 240 einströmenden Luftstrom um 90° umlenkt, bevor dieser in das erste Wärmtauschermaterial 230 eintritt. Der Nutzen der zweiten Strömungsleitvorrichtung 245 ist ähnlich zu demjenigen der ersten Strömungsleitvorrichtung 215.

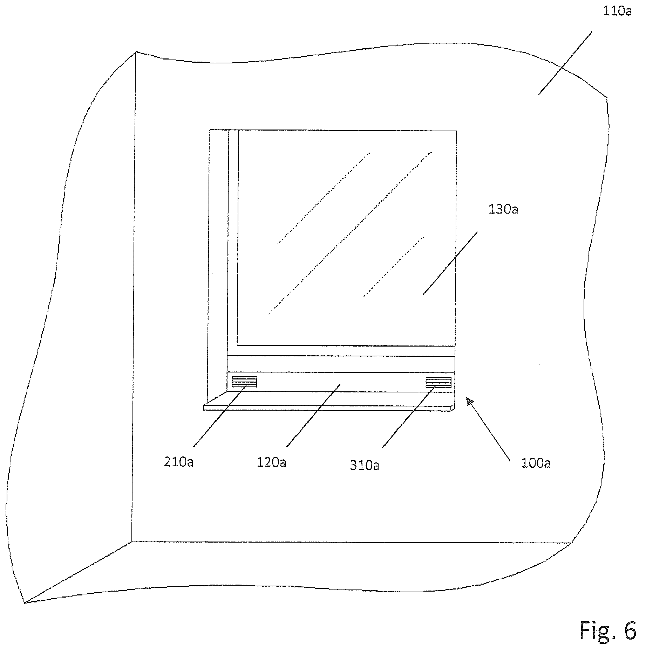

Fig. 6 zeigt ein Ausführungsbeispiel eines Systems 100a zur Belüftung eines Raums, welches in einem Adapterprofil 120a eines Fensters 130a ausgebildet ist. Das Adapterprofil 120a ist dabei unmittelbar unterhalb des Fensters 130a angeordnet, welches in einer Wand 110a eingebaut ist.

Von jeweiligen Einbauprofilen in dem System 100a ist in der gezeigten Darstellung, wie sie vom Inneren des Raumes aus gesehen wird, lediglich der erste Auslass 210a und der zweite Einlass 310a sichtbar. Es ragen keine unförmigen Elemente in den Raum herein. Auch sonst wird der ästhetische Eindruck des Fensters 130a und der umgebenden Wand 110a nicht beeinträchtigt.

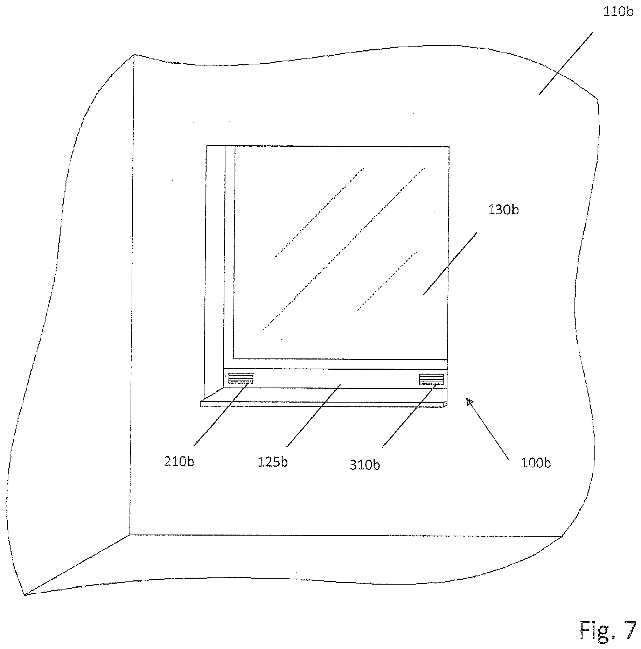

Fig. 7 zeigt ein Ausführungsbeispiel eines Systems 100b, welches ähnlich demjenigen ist, welches in Fig. 6 gezeigt ist. Im Unterschied zur Ausführung von Fig. 6 ist das System 100b in einen Fensterrahmen 125b eines Fensters 130b eingebaut. Auch in diesem Fall sind lediglich der erste Auslass 210b und der zweite Einlass 310b sichtbar. Der ästhetische Eindruck des Fensters 130b und einer umgebenden Wand 110b werden nicht beeinträchtigt.

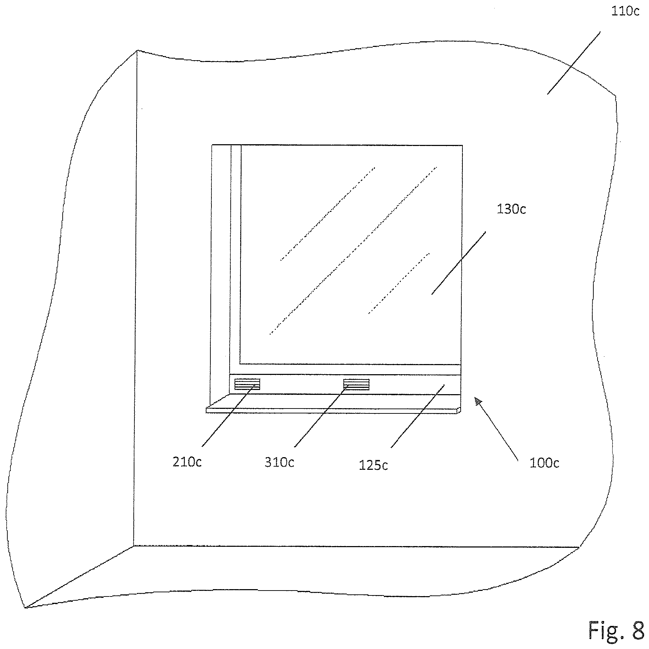

Fig. 8 zeigt ein Ausführungsbeispiel eines Systems 100c, welches ähnlich demjenigen ist, welches in Fig. 7 gezeigt ist. Im Unterschied zur Ausführung von Fig. 7 ist das System 100c jedoch wie in Fig. 1b dargestellt ausgebildet. Damit sind ein erster Auslass 210c und ein zweiter Einlass 310c näher zusammen. Ansonsten handelt es sich jedoch auch hierbei um eine Ausführung, welche als Teil eines Fensterrahmens 125c eines Fensters 130c in einer Wand 110c ausgebildet ist.

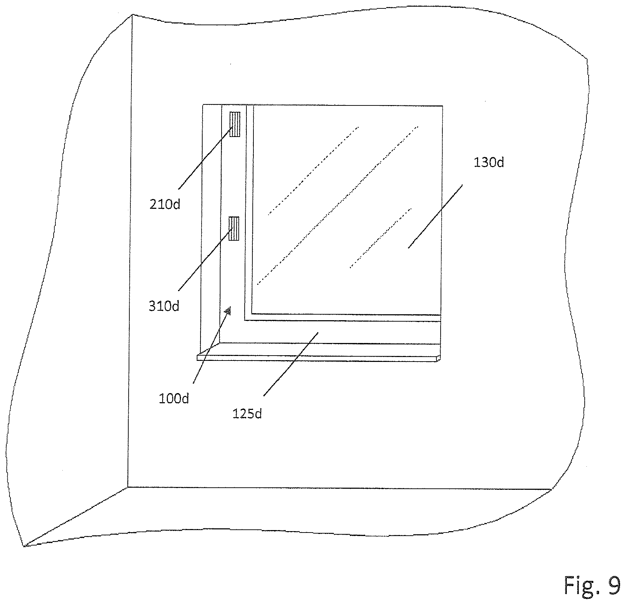

Fig. 9 zeigt ein Ausführungsbeispiel eines Systems 100d, welches ähnlich demjenigen von Fig. 8 aufgebaut ist. In Abwandlung dazu ist jedoch das System 100d vertikal, also nicht wie in Fig. 8 horizontal, in einen Fensterrahmen 125d eines Fensters 130d eingebaut.

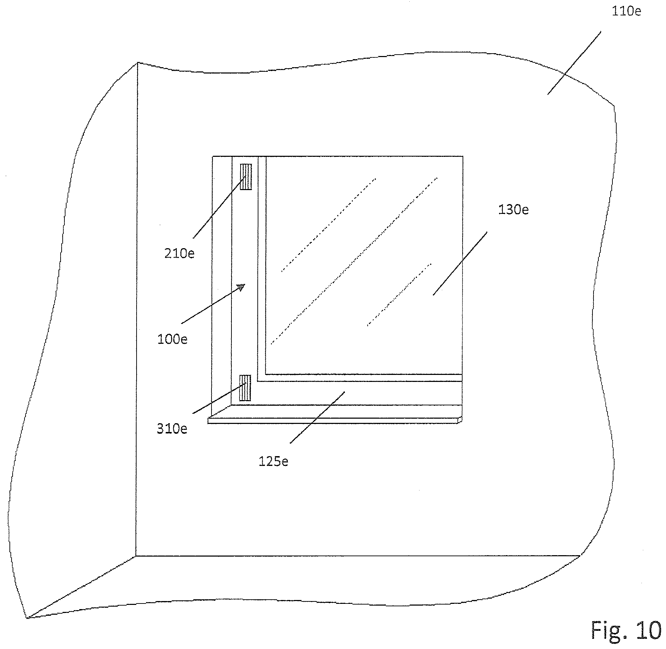

Fig. 10 zeigt ein Ausführungsbeispiel eines Systems 100e, welches ähnlich demjenigen von Fig. 9 aufgebaut ist. In Abwandlung dazu ist jedoch das System 100e wie in Fig. 1a dargestellt aufgebaut. Dementsprechend sind ein erster Auslass 210e und ein zweiter Einlass 310e weiter voneinander beabstandet. Auch in dem Ausführungsbeispiel von Fig. 10 ist das System als Teil eines Fensterrahmens 125e eines Fensters 130e in einer Wand 110e ausgebildet.

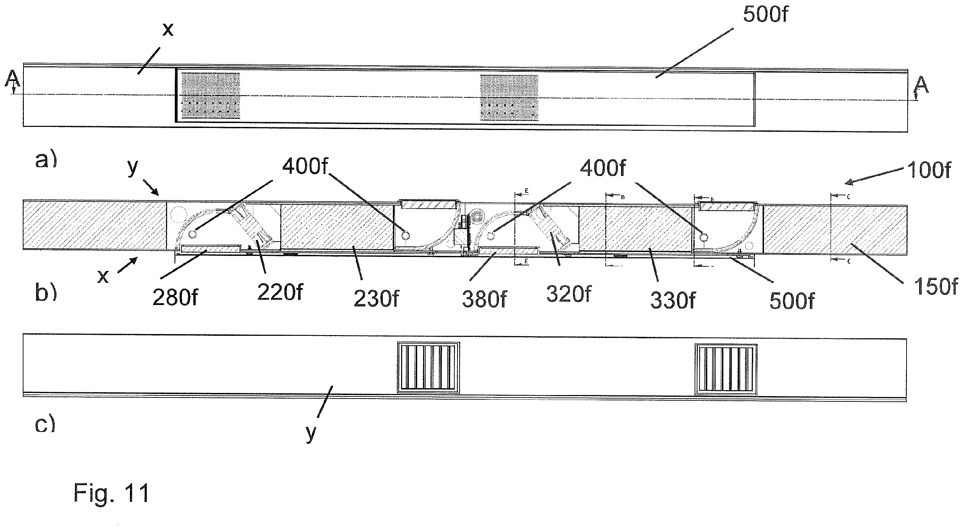

Die Fig. 11a) bis c) zeigen unterschiedliche Darstellungen eines erfindungsgemäßen Ausführungsbeispiels eines Systems 100f. Fig. 11a) zeigt eine Außenansicht des Systems von einer ersten Seite x, Fig. 11b) eine Schnittdarstellung entlang der Linie A-A in Fig. 11a), und Fig. 11c) Außenansicht des Systems von einer zweiten, der ersten gegenüberliegenden Seite y.

Das System 100f ist ähnlich dem System von Fig. 1b aufgebaut. Die nachfolgende Beschreibung konzentriert sich auf die Unterschiede. In Abwandlung zu dem System der Fig. 1b sind die Axialventilatoren 220f und 320f im System 100f so angeordnet, dass ihre Drehachsen um 45° aus dem Luftstrom herausgedreht sind. Eine solche Ventilatoranordnung optimiert die Anströmung des Wärmetauschers 230f bzw. 330f zusätzlich und führt zu einem niedrigen Stromverbrauch des Ventilators.

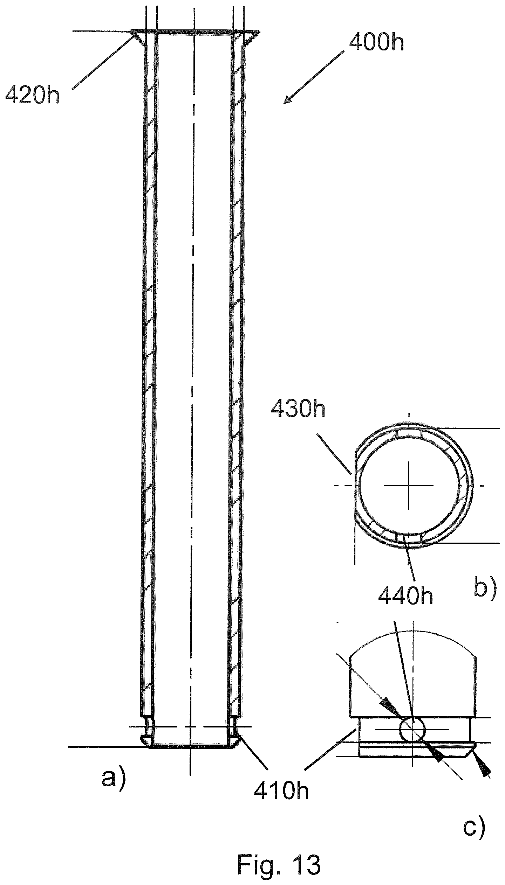

Darüberhinaus verfügt das vorliegende Ausführungsbeispiel über Hülsen 400f, durch die Schrauben zur Befestigung des Systems an einer angrenzenden Wand geführt werden können. Gleichzeitig dienen die Hülsen zur Fixierung der Bauteile des System 100f gegeneinander. Ein Beispiel einer geeigneten Hülse ist unten in Fig. 13 dargestellt.

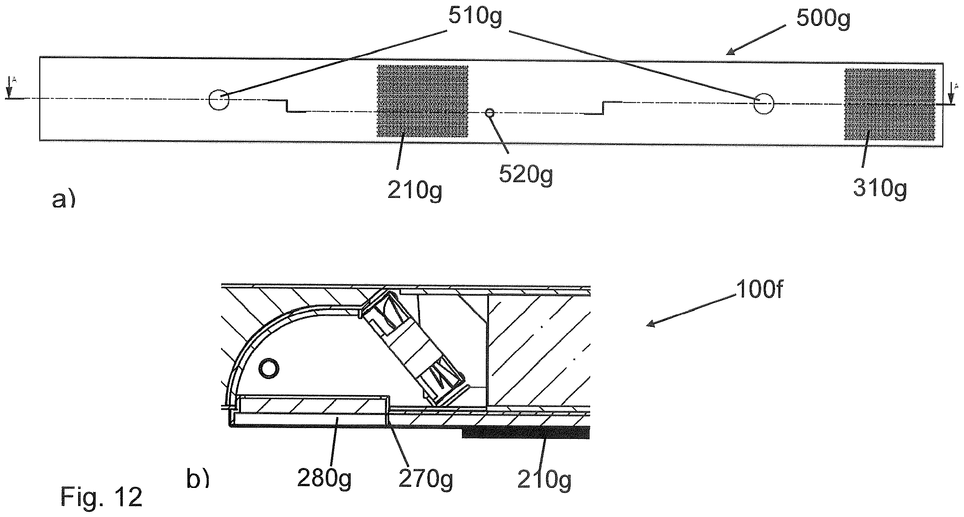

Fig. 12 a) zeigt eine Rückansicht einer für das System 100f geeigneten Innenblende 500g. Sie hat zwei Magneten 510g zur Befestigung an dem System 100f und einen Magneten 520g, dessen Position von einem hier nicht dargestellten, am System 100f angeordneten Hall-Sensor detektiert werden kann. Die Innenblende 500g hat einen ersten Auslass 210g und einen zweiten Einlass 310g. Die Anordnung des Einlasses und des Auslasses entlang der Längserstreckung der Innenblende entspricht der Anordnung der Lüftungsöffnungen 280f und 380f des Systems 100f in Fig. 11b). Insbesondere ist sie bezüglich der Längserstreckung des Einbauprofils unsymmetrisch.

Fig. 12 b) zeigt die Wirkung der Innenblende an einem Ausschnitt des Systems 100f. Die Innenblende 500g ist hier verdreht angeordnet. Wird die Innenblende 500g aus ihrer ursprünglichen Position, bei der der Auslass 210g der Innenblende über der Lüftungsöffnung 280g des Systems 100f liegt, um 180° verdreht angebracht, so verschließt die Innenblende im Zusammenwirken mit einem Steg 270g das System. Der Steg verläuft an einer Außenseite eines hinter der Innenblende liegenden, von einem Hohlprofil gebildeten Corpus 150f so, dass in dieser gedrehten Anordnung der Innenblende keine Luft vom Auslass 210g der Innenblende zur Lüftungsöffnung 280g im Corpus 150f strömen kann. Der Hall-Sensor detektiert die neue Position der Blende und ermöglicht so, ein Abschalten des Ventilationssystems zu veranlassen.

Fig. 13 zeigt in drei Teilfiguren 13a) bis 13c) eine Ausführungsform einer Hülse 400h für ein Einbauprofil, wie es beispielsweise im System 100f der Fig. 11 dargestellt ist. Fig. 13 a) zeigt einen Längsschnitt der Hülse 400h. Die Hülse verfügt an einem unteren Ende über eine umlaufende Nut 410h, in die zur Arretierung der Hülse am Einbauprofil beispielsweise ein Kabelbinder aufgenommen werden kann. An einem gegenüberliegenden, oberen Ende verfügt die Hülse 400h über einen umlaufenden, abgeschrägten Rand 420h, mit Hilfe dessen sie in einer abgesenkten Bohrung im Einbauprofil bündig angeordnet werden kann.

Fig. 13b) zeigt eine Querschnittsansicht einer Variante der Hülse 400h in einer nahe dem unteren Ende liegenden Querschnittsebene. Die ansonsten zylindrische Hülse verfügt hier über einen kreisrunden Innenquerschnitt, wobei der Außenquerschnitt eine Abflachung 430h aufweist. Ein Loch 440h im Bereich der des umlaufenden Nut 410h auf Höhe der Abflachung dient zur Aufnahme eines Arretierstifts. Fig. 13 c) zeigt eine seitliche Teilansicht dieser Variante der Hülse 400h, ebenfalls im Bereich ihres unteren Endes.

### Bezugszeichenliste

- 100: System
- 110: Wand
- 120: Adapterprofil
- 125: Fensterrahmen
- 130: Fenster
- 150: Corpus
- 200: erstes Einbauprofil
- 210: erster Auslass
- 215: Strömungsleitvorrichtung
- 220: Ventilator
- 230: Wärmetauschermaterial
- 240: erster Einlass
- 245: zweite Strömungsleitvorrichtung
- 250: Strömungsrichtung
- 260: Strömungsrichtung
- 270: Steg
- 280: Lüftungsöffnung
- 300: zweites Einbauprofil
- 310: zweiter Einlass
- 320: zweiter Ventilator
- 330: zweites Wärmetauschermaterial
- 340: zweiter Auslass
- 350: Strömungsrichtung
- 400: Hülse
- 410: Nut
- 420: abgeschrägter Rand
- 430: Abflachung
- 440: Loch
- 500: Innenblende
- 510: Magnet zur Befestigung
- 520: Magnet zur Positionsdetektion

## Patentansprüche

1. Einbauprofil (200) zum Anbau an ein Wandsystem in einer Gebäudewand (110), aufweisend:
- einen Profilinnenraum, der als Strömungsraum ausgebildet ist, und welcher einen Einlass (240) und einen Auslass (210) aufweist;
- ein Wärmetauschermaterial (230), welches im Strömungsraum durchströmbar zwischen dem Einlass (240) und dem Auslass (240) angeordnet ist;
- ein Ventilationssystem zur bidirektionalen Strömungsförderung durch das Wärmetauschermaterial wobei, das Ventilationssystem genau einen Axialventilator (220) aufweist, welcher bidirektional betreibbar ist und unter Belassen eines Vergleichmäßigungsabstands, der einen Vergleichmäßigungsraum definiert, beabstandet vom Wärmetauschermaterial (230) im Strömungsraum angeordnet ist,
wobei
im Vergleichmäßigungsraum ein Strömungsvergleichmäßiger angeordnet ist, so dass unter Vermeidung einer nicht ausreichenden Anströmung des Wärmetauschermaterials aufgrund einer Totzone des Axialventilators ein durch den Axialventilator erzeugter Luftstrom gleichmäßig verteilt durch das Wärmetauschermaterial strömt,
**dadurch gekennzeichnet, dass**
der Axialventilator so angeordnet ist, dass seine Drehachse mit dem Luftstrom einen Winkel zwischen 30 ° und 60 ° bildet.

2. Einbauprofil (200) nach Anspruch 1,
bei welchem der Vergleichmäßigungsabstand weniger als 10 cm, insbesondere weniger als 1 cm beträgt.

3. Einbauprofil (200) nach einem der Ansprüche 1 bis 2, wobei
der Axialventilator zwischen dem Wärmetauschermaterial und dem Einlass angeordnet ist oder der Axialventilator zwischen dem Wärmetauschermaterial und dem Auslass angeordnet ist.

4. Einbauprofil (200) nach einem der vorstehenden Ansprüche, bei dem der Axialventilator ein Ventilatorrad hat, dessen äußerer Umfang in mindestens einer senkrecht zur Achse des Ventilators stehenden Ebene durch einen Kreis beschreibbar ist, und bei dem der Vergleichmäßigungsabstand mit einer Abweichung von maximal 20% insbesondere kleiner als 10%, insbesondere genau gleich dem Radius des Kreises ist.

5. Einbauprofil (200) nach einem der Ansprüche 1 bis 4,
bei welchem der Axialventilator so angeordnet ist, dass seine Drehachse mit dem Luftstrom einen Winkel von 45 ° bildet.

6. Einbauprofil (200) nach einem der Ansprüche 1 bis 5,
bei welchem das Wärmetauschermaterial pulver- oder kugelförmig ist und in einer Kassette beinhaltet ist oder bei welchem das Wärmetauschermaterial ein keramisches Material, insbesondere ein solches mit einem Anteil an Metalloxid, ist.

7. Einbauprofil (200) nach einem der Ansprüche 1 bis 6,
welches eine Innenblende (500) aufweist, die mindestens eine Lüftungsöffnung hat und mit Magnetkraft am Einbauprofil lösbar befestigt ist, wobei der Auslass (210) in einer ersten Position über der Lüftungsöffnung (280) des Einbauprofils angeordnet ist und dass in einer zweiten um 180 ° gegenüber der ersten gedrehten Position der Innenblende (500) die Lüftungsöffnung des Einbauprofils verschlossen wird.

8. Einbauprofil (200) nach Anspruch 7,
welches über einen außermittig an der Innenblende (500) angebrachten Magneten (520) sowie einen Hall-Sensor verfügt, welcher die Position der Innenblende detektieren kann.

9. System (100) zur Belüftung eines Raums,
welches ein Einbauprofil (200) nach einem der Ansprüche 1 bis 8 sowie ein weiteres Einbauprofil (300) nach einem der Ansprüche 1 bis 8 aufweist,
bei welchem das Einbauprofil (200) und das weitere Einbauprofil (300) alternierend strömungsgegenläufig geschaltet werden.

10. System (100) nach Anspruch 9,
bei welchem das Einbauprofil (200) und das weitere Einbauprofil (300) als ein Lüftungsprofil miteinander verbunden sind.

11. System nach Anspruch 10,
welches im oder als Adapterprofil (120) eines Fensters (130) oder als Teil eines Fensterrahmens (125) ausgebildet ist.

## Claims

1. Recessed profile (200) for attachment to a wall system in a building wall (110), having:
- a profile interior, which is formed as a flow space and which has an inlet (240) and an outlet (210),
- a heat exchanger material (230), which is arranged permitting flow-through in the flow space between the inlet (240) and the outlet (240),
- a ventilation system for bidirectional flow conveyance through the heat exchanger material, wherein the ventilation system has exactly one axial fan (220), which can be operated bidirectionally and, by leaving a homogenisation distance, which defines a homogenisation space, is arranged at a distance from the heat exchanger material (230) in the flow space, wherein
a flow homogeniser is arranged in the homogenisation space such that, by preventing an insufficient inflow to the heat exchanger material, due to a dead zone of the axial fan, an airflow produced by the axial fan flows evenly through the heat exchanger material,
**characterised in that**
the axial fan is arranged such that its axis of rotation with the air flow forms an angle of between 30 ° and 60 °.

2. Recessed profile (200) according to claim 1,
wherein the flow homogenisation distance is less than 10 cm, in particular less than 1 cm.

3. Recessed profile (200) according to any one of the claims 1 to 2,
wherein the axial fan is arranged between the heat exchanger material and the inlet or the axial fan is arranged between the heat exchanger material and the outlet.

4. Recessed profile (200) according to any one of the preceding claims, wherein the axial fan has a fan impeller, the outer circumference of which can be described by a circle in at least one plane perpendicular to the axis of the fan and wherein the homogenisation distance, with a deviation of a maximum of 20%, in particular less than 10%, is in particular exactly equal to the radius of the circle.

5. Recessed profile (200) according to any one of the claims 1 to 4,
wherein the axial fan is arranged such that its axis of rotation with the air flow forms an angle of 45 °.

6. Recessed profile (200) according to any one of the claims 1 to 5,
wherein the heat exchanger material is in powder form or spheroidal and is contained in a cassette, or wherein the heat exchanger material is a ceramic material, in particular such a material containing a proportion of metal oxide.

7. Recessed profile (200) according to any one of the claims 1 to 6,
which has an inner panel (500), which has at least one ventilation opening and is secured releasably to the recessed profile by magnetic force, wherein the outlet (210) is arranged in a first position above the ventilation opening (280) of the recessed profile, and in a second position rotated 180 ° relative to the first rotated position of the inner panel (500), the ventilation opening of the recessed profile is closed.

8. Recessed profile (200) according to claim 7,
which has a magnet (520) mounted off-centre on the inner panel (500) as well as a Hall sensor, which can detect the position of the inner panel.

9. System (100) for ventilating a room,
which comprises a recessed profile (200) according to any one of the claims 1 to 8 as well as a further recessed profile (300) according to any one of the claims 1 to 8,
wherein the recessed profile (200) and the further recessed profile (300) are switched alternately to opposite flow directions.

10. System (100) according to claim 9,
wherein the recessed profile (200) and the further recessed profile (300) are connected to each other as a ventilation profile.

11. System according to claim 10,
which is formed in or as an adapter profile (120) of a window (130) or as part of a window frame (125).

## Revendications

1. Profilé d'encastrement (200) destiné à être monté sur un système mural dans une paroi de bâtiment (110), comprenant :
- un espace interne de profilé qui est conçu comme un espace d'écoulement et qui comprend une entrée (240) et une sortie (210) ;
- un matériau échangeur thermique (230), qui est disposé de façon à être traversé dans l'espace d'écoulement entre l'entrée (240) et la sortie (210) ;
- un système de ventilation pour un transport par écoulement bidirectionnel à travers le matériau échangeur thermique, le système de ventilation comprenant exactement un ventilateur axial (220) qui peut être utilisé de manière bidirectionnelle et qui est disposé, en laissant une distance d'uniformisation, qui définit un espace d'uniformisation, à une certaine distance du matériau échangeur thermique (230) dans l'espace d'écoulement, dans lequel
dans l'espace d'uniformisation, est disposé un dispositif d'uniformisation d'écoulement de façon à ce que, tout en évitant un écoulement insuffisant dans le matériau échangeur thermique du fait d'une zone morte du ventilateur axial, un flux d'air généré à travers le ventilateur axial s'écoule de manière uniformément répartie à travers le matériau échangeur thermique,
**caractérisé en ce que**
le ventilateur axial est disposé de façon à ce que son axe de rotation forme, avec le flux d'air, un angle entre 30° et 60°,.

2. Profilé d'encastrement (200) selon la revendication 1,
dans lequel la distance d'uniformisation est inférieure à 10 cm, plus particulièrement inférieur à 1 cm.

3. Profilé d'encastrement (200) selon l'une des revendications 1 à 2,
le ventilateur axial étant disposé entre le matériau échangeur thermique et l'entrée ou le ventilateur axial étant disposé entre le matériau échangeur thermique et la sortie.

4. Profilé d'encastrement (200) selon l'une des revendications précédentes, dans lequel le ventilateur axial comprend une roue de ventilateur dont la circonférence extérieure peut être décrite, dans au moins un plan perpendiculaire à l'axe du ventilateur, par un cercle et dans lequel la distance d'uniformisation est égal, avec un écart de 20 % maximum, plus particulièrement inférieur à 10 %, plus particulièrement est exactement égal au rayon du cercle.

5. Profilé d'encastrement (200) selon l'une des revendications 1 à 4, dans lequel le ventilateur axial est disposé de façon à ce que son axe de rotation forme, avec le flux d'air, un angle de 45°.

6. Profilé d'encastrement (200) selon l'une des revendications 1 à 5, dans lequel le matériau échangeur thermique se présente sous la forme d'une poudre ou de billes et est contenue dans une cassette ou dans lequel le matériau échangeur thermique est un matériau céramique, plus particulièrement avec une part d'oxyde métallique.

7. Profilé d'encastrement (200) selon l'une des revendications 1 à 6,
qui comprend un diaphragme interne (500) qui comprend une ouverture de ventilation et qui est fixé de manière amovible au profilé d'encastrement, la sortie (210) étant disposée, dans une première position, au-dessus de l'ouverture de ventilation (280) du profilé d'encastrement et, dans une deuxième position, décalée de 180° par rapport à la première position tournée du diaphragme interne (500), l'ouverture de ventilation du profilé d'encastrement est obturée.

8. Profilé d'encastrement (200) selon la revendication 7,
qui disposé d'un aimant (520) monté de manière excentrée sur le diaphragme interne (500) ainsi que d'un capteur à effet Hall, qui peut détecter la position du diaphragme interne.

9. Système (100) pour la ventilation d'une pièce,
qui comprend un profilé d'encastrement (200) selon l'une des revendications 1 à 8 ainsi qu'un profilé d'encastrement supplémentaire (300) selon l'une des revendications 1 à 8,
dans lequel le profilé d'encastrement (200) et le profilé d'encastrement supplémentaire (300) sont montés de manière alternée à contre-courant.

10. Système (100) selon la revendication 9,
dans lequel le profilé d'encastrement (200) et le profilé d'encastrement supplémentaire (300) sont reliés entre eux afin d'obtenir un profilé de ventilation.

11. Système (100) selon la revendication 10,
qui est disposé dans ou conçu comme un profilé adaptateur (120) d'une fenêtre (130) ou comme une partie d'un cadre de fenêtre (125).
